Europäisches Patentamt

European Patent Office

Office européen des brevets

(19)

(11) Veröffentlichungsnummer : **0 059 907**
**B1**

(12) # EUROPÄISCHE PATENTSCHRIFT

(45) Veröffentlichungstag der Patentschrift :
15.05.85

(51) Int. Cl.⁴ : **C 01 B 21/14**

(21) Anmeldenummer : **82101528.6**

(22) Anmeldetag : **27.02.82**

(54) Verfahren zur Herstellung von Hydroxylammoniumsalzen.

(30) Priorität : **05.03.81 DE 3108257**

(43) Veröffentlichungstag der Anmeldung :
**15.09.82 Patentblatt 82/37**

(45) Bekanntmachung des Hinweises auf die Patenterteilung : **15.05.85 Patentblatt 85/20**

(84) Benannte Vertragsstaaten :
**BE CH DE FR GB IT LI NL**

(56) Entgegenhaltungen :
**EP-A- 0 008 479**
**DE-B- 1 177 118**

(73) Patentinhaber : **BASF Aktiengesellschaft**
**Carl-Bosch-Strasse 38**
**D-6700 Ludwigshafen (DE)**

(72) Erfinder : **Grosskinksky, Otto-Alfred, Dr.**
**Semmel Weisstrasse 8**
**D-6700 Ludwigshafen (DE)**
Erfinder : **Frommer, Elmar, Dr.**
**Lisztstrasse 117**
**D-6700 Ludwigshafen (DE)**
Erfinder : **Rapp, Guenther, Dr.**
**Mundenheimer Strasse 174**
**D-6700 Ludwigshafen (DE)**
Erfinder : **Thomas, Erwin**
**Borngasse 12**
**D-6713 Freinsheim (DE)**

## Beschreibung

Gegenstand der Erfindung ist ein Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspengierten Platinträgerkatalysatoren bei erhöhter Temperatur und erhöhtem Druck in mindestens zwei Reaktionszonen.

Bei der Herstellung von Hydroxylammoniumsalzen durch katalytische Hydrierung von Stickstoffmonoxid mit Wasserstoff entsteht als Nebenprodukt unter anderem Distickstoffoxid. Man erhält somit als Abgas ein Gemisch, das Wasserstoff, Stickstoffmonoxid und Distickstoffoxid enthält. Solche Gase sind in Abhängigkeit von ihrer Zusammensetzung und dem angewandten Druck explosibel. Dies gilt insbesondere dann, falls man die Abgase aus der Hydroxylaminsynthese, die noch Stickstoffmonoxid und Wasserstoff enthalten, möglichst weitgehend ausnutzen möchte. Aus der europäischen Patentanmeldung 0008479 ist bekannt, daß man bei der Herstellung von Hydroxylammoniumsalzen durch katalytische Reduktion von Stickstoffmonoxid mit Wasserstoff das Ausgangsgas mit 10 bis 80 Vol.% Inertgas verdünnt. Bei einer solchen Arbeitsweise vermeidet man zwar den explosiblen Bereich im Abgas, aufgrund der starken Verdünnung ist es jedoch nicht möglich, die im Abgas enthaltenen Wertstoffe ohne aufwendige technische Maßnahmen wieder zu verwenden. Ferner wird in der genannten europäischen Patentanmeldung erwähnt, daß man die Umsetzung in zwei getrennten Reaktoren unter schwach erhöhtem Druck durchführt. Hierbei ist es jedoch erforderlich, sehr reine Ausgangsgase zu verwenden. Die Verwendung von sehr reinen Ausgangsgasen ist jedoch technisch sehr aufwendig. Darüber hinaus wird kein Hinweis gegeben, wie die anfallenden Abgase gefahrlos wieder verwendet werden können.

In der DE-B-1 177 118 wird zur Herstellung von Hydroxylammoniumsalzen aus Stickstoffmonoxid ausgeführt : Das Verfahren stellt keine besonderen Anforderungen an den Druck, unter dem es durchgeführt wird. Die bei Normaldruck erzielten Umsätze sind im allgemeinen ausreichend. Bei der im Schema 2 veranschaulichten Arbeitsweise kann z. B. das Stickoxyd-Wasserstoff-Gemisch in den Stufen V, IV und III unter einem solchen Druck gehalten werden, daß die Abgase aus diesen Stufen direkt in die Stufen II und I entspannt werden. Man kann aber auch so arbeiten, daß in den Stufen V, IV und III Normaldruck herrscht und die Abgase aus diesen Stufen komprimiert werden, bevor sie in die Stufen II und I eintreten. Dies besagt eindeutig, daß nur so hohe Drücke angewandt werden, um den statischen Druck bei der Zuführung des Gasgemisches zu überwinden. Bei solchen Drücken stellt sich die Aufgabe, wie sie der Erfindung zugrundeliegt, nicht, da die hierbei entstehenden Abgase nicht im Explosionsbereich liegen. Überdies wird in der DE-B-1 177 118 nicht aufgeführt, daß die entstehenden Abgase Distickstoffoxid enthalten, und wie zu verfahren ist, um Explosionen zu vermeiden. Die dort aufgeführte Maßnahme, daß das Gas auch komprimiert werden kann, führt von der Lösung der gestellten Aufgabe weg.

Es war deshalb die technische Aufgabe gestellt, Hydroxylammoniumsalze durch katalytische Reduktion von Stickstoffmonoxid mit Wasserstoff unter erhöhtem Druck herzustellen und die entstehenden Abgase gefahrlos wieder zu verwenden.

Diese Aufgabe wird gelöst in einem Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinträgerkatalysatoren bei erhöhter Temperatur und unter erhöhtem Druck in mindestens zwei Reaktionszonen, wobei man die Umsetzung in einer oder mehreren Reaktionszonen unter einem Druck von 3 bis 20 bar durchführt, die anfallenden Distickstoffoxid enthaltenden Abgase auf einen um 3 bis 10 bar niedrigeren Druck entspannt und in einer nachfolgenden Reaktionszone mit dem Hydroxylammoniumsalze, Ammoniumsalze, Platinträgerkatalysatoren und noch freie Mineralsäure enthaltenden Reaktionsgemisch aus der oder den vorhergehenden Reaktionszonen oder einer frischen wäßrigen Lösung von Mineralsäure, die Platinträgerkatalysatoren suspendiert enthält, umsetzt.

Das neue Verfahren hat den Vorteil, daß man die Hydroxylaminsynthese unter relativ hohem Druck und somit guten Raum-Zeit-Ausbeuten durchführt und andererseits die anfallenden Gase nutzbringend für die Hydroxylaminsynthese verwendet und zugleich die Bildung von explosiblen Gemischen bei der Wiederverwendung der Abgase vermeidet.

In der Regel hält man ein Molverhältnis von Wasserstoff zu Stickstoffmonoxid von 1,5 : 1 bis 6 : 1 ein, besonders gute Ergebnisse erhält man, wenn man darauf achtet, daß im anfallenden Abgas ein Molverhältnis von Wasserstoff zu Stickstoffmonoxid von 3,5 bis 5 : 1 aufrechterhalten wird. Es ist nicht erforderlich, reine Ausgangsgase zu verwenden. Die Ausgangsgase Wasserstoff und Stickstoffmonoxid können z. B. bis zu 10 Vol.% Inertgase wie Stickstoff enthalten.

Vorteilhaft verwendet man als Säuren starke Mineralsäuren wie Chlorwasserstoffsäure, Salpetersäure, Schwefelsäure oder Phosphorsäure. Geeignet sind auch deren saure Salze wie Ammoniumbisulfat. Besonders bevorzugt wird Schwefelsäure und/oder Ammoniumbisulfat verwendet. In der Regel geht man von 4 bis 6 n wäßrigen Säuren aus und läßt im Verlauf der Reaktion die Säurekonzentration nicht unter 0,2 n fallen.

Die Umsetzung wird in Gegenwart von Platinträgerkatalysatoren durchgeführt. Besonders bewährt haben sich Platin auf Kohleträger, insbesondere auf Graphit. Vorzugsweise hat ein solcher Trägerkatalysator einen Gehalt von 0,2 bis 5 Gew.% Platin. Vorteilhaft enthalten die Katalysatoren zusätzlich ein oder mehrere Elemente der V. und/oder VI. Hauptgruppe des Periodischen Systems mit einem Atomgewicht > 31, ferner Blei und/oder Quecksilber als vergiftende Mittel. Geeignete Katalysatoren und deren Herstellung werden beispielsweise beschrieben in der DE-PS 920 963, 956 038, 945 752 oder 1 088 037. Während der Reaktion liegt der Trägerkatalysator als Suspension in der Reaktionslösung vor.

Vorzugsweise führt man die Umsetzung bei Temperaturen von 30 bis 80 °C durch. Besonders bewährt haben sich Temperaturen von 40 bis 60 °C.

Die Umsetzung wird in einer oder mehreren Reaktionszonen unter erhöhtem Druck in an sich bekannter Weise durchgeführt. Vorteilhaft wendet man bis zu 10, insbesondere 3 bis 10 Reaktionszonen, z. B. Rührkessel hintereinander geschaltet als Kaskade an. Hierbei durchfließt die Katalysator enthaltende wäßrige Lösung von Mineralsäure die Reaktionszonen nacheinander, wobei sich in zunehmendem Maße Hydroxylammoniumsalze bilden. Um den Gehalt an Distickstoffoxid im Abgas klein zu halten, ist es zweckmäßig, jede Reaktionszone getrennt mit frischem Wasserstoff und Stickstoffmonoxid zu beschicken. Die Umsetzung wird unter erhöhtem Druck, 3 bis 20 bar durchgeführt. Die Druckverhältnisse wählt man vorteilhaft so, daß das entstehende Abgas nicht im explosiblen Bereich liegt. Die anfallenden Abgase bestehen im wesentlichen aus Stickstoffmonoxid, Distickstoffoxid, Wasserstoff, Stickstoff und anderen Inertgasen. Die in den einzelnen Reaktionszonen anfallenden Abgase werden gesammelt und auf einen um 3 bis 10 bar niedrigeren Druck, insbesondere auf Atmosphärendruck, entspannt. In einer nachfolgenden Reaktionszone wird dann das gesammelte Abgas mit dem Hydroxylammoniumsalze, Ammoniumsalze, Platinträgerkatalysator und noch freie Mineralsäure enthaltenden Reaktionsgemisch, das in den vorangehenden Reaktionszonen anfällt, umgesetzt. Nach einer anderen Arbeitsweise setzt man die gesammelten Abgase mit einer frischen wäßrigen Lösung von Mineralsäuren in Gegenwart von Platinträgerkatalysatoren um. Vorteilhaft wird das Abgas vor Eintritt in die letztgenannte Reaktionszone mit frischem Stickstoffmonoxid versetzt, um die vorangehend genannten Verhältnisse an Stickstoffmonoxid und Wasserstoff einzuhalten. Bei Verwendung von frischer wäßriger Lösung an Mineralsäure wird das in der letztgenannten Zone anfallende Reaktionsgemisch der ersten Reaktionszone, die unter Druck betrieben wird, zugeführt.

Hydroxylammoniumsalze, die nach dem Verfahren der Erfindung erhalten werden, eignen sich zur Herstellung von Oximen, insbesondere Cyclohexanonoxim, einem Ausgangsstoff für die Herstellung von Caprolactam.

Das Verfahren nach der Erfindung sei an folgendem Beispiel veranschaulicht.

Beispiel

a) In einer Rührkesselkaskade bestehend aus 5 Rührkesseln werden jeweils 5 l 4,3 n Schwefelsäure und 500 g Platingraphitkatalysator mit einem Platingehalt von 0,5 Gew.% vorgelegt. Dem ersten Rührkessel führt man stündlich 56,3 l 4,3 n Schwefelsäure sowie Katalysator zu und leitet in jeden Rührkessel von unten stündlich 2 Nm³ Wasserstoff und 1,2 Nm³ Stickstoffmonoxid 96 %ig ein. Die Umsetzung wird bei einer Temperatur von 40 °C und unter einem Druck von 20 bar durchgeführt. Aus dem fünften Rührkessel entnimmt man das Reaktionsgemisch in dem Maße, wie im ersten Rührkessel Schwefelsäure zugegeben wird. Der Katalysator wird abgetrennt und in den ersten Rührkessel zurückgeführt. Nicht umgesetzte Gase, die über ein Druckhalteventil entweichen, werden gemessen und analysiert. Stündlich erhält man 17 925 g Hydroxylammoniumsulfat und als Abgas 2 084 l Wasserstoff, 344 l Stickstoffmonoxid, 202 l Distickstoffoxid und 240 l Stickstoff. Das Abgas liegt somit gerade noch außerhalb der Explosionsgrenze bei 20 bar. Für 100 g erzeugtes Hydroxylamin werden 138,5 l Wasserstoff und 80,0 l Stickstoffmonoxid, berechnet 100 %ig, verbraucht.

b) Das aus a) erhaltene Abgas wird auf Atmosphärendruck entspannt und in einen Rührkessel mit 40 l Inhalt, der mit 30 l 4,3 n Schwefelsäure sowie 3 000 g Platingraphitkatalysator der obigen Zusammensetzung beschickt ist, eingeleitet und die Reaktion bei Atmosphärendruck bei 40 °C durchgeführt. Stündlich fallen 1 650 l Wasserstoff, 60 l Stickstoffmonoxid, 204 l Distickstoffoxid und 240 l Stickstoff an. Insgesamt werden somit für die Erzeugung von 100 g Hydroxylamin in a) und b) gemeinsam 131,3 l Wasserstoff und 75,9 l Stickstoffmonoxid verbraucht.

c) Man verfährt wie in b) beschrieben, setzt dem aus a) erhaltenen Abgas jedoch zusätzlich stündlich 290 l Stickstoffmonoxid zu. Stündlich fallen 1 217 l Wasserstoff, 66 l Stickstoffmonoxid, 206 l Distickstoffoxid und 240 l Stickstoff als Abgas an. Für die Erzeugung von 100 g Hydroxylamin werden in a) und c) insgesamt 124,9 l Wasserstoff und 75,7 l Stickstoffmonoxid verbraucht.

Die in b) und c) anfallenden Abgase liegen unter Atmosphärendruck nicht im Explosionsbereich.

**Patentanspruch**

Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinträgerkatalysatoren bei erhöhter Temperatur und unter erhöhtem Druck in mindestens zwei Reaktionszonen, dadurch gekennzeichnet, daß man die Umsetzung in einer oder mehreren Reaktionszonen unter einem Druck von 3 bis 20 bar durchführt, die anfallenden Distickstoffoxid enthaltenden Abgase auf einen um 3 bis 10 bar niedrigeren Druck entspannt und in einer nachfolgenden Reaktionszone mit dem Hydroxylammoniumsalze, Ammoniumsalze, Platinträgerkatalysatoren und noch freie Mineralsäure enthaltenden Reaktionsgemisch aus der oder den vorhergehenden Reaktionszonen oder einer frischen wäßrigen Lösung von Mineralsäuren, die Platinträgerkatalysatoren suspendiert enthält, umsetzt.

**Claim**

A process for the preparation of hydroxylammonium salts by catalytic reduction of nitric oxide with hydrogen in a dilute aqueous solution of a mineral acid, in the presence of a suspended supported platinum catalyst, at elevated temperature and pressure in at least two reaction zones, wherein the reaction is carried out in one or more reaction zones under a pressure of from 3 to 20 bars, the nitrous oxide-containing exit gases produced are let down to a pressure which is from 3 to 10 bars lower, and are reacted, in a downstream reaction zone, wit the reaction mixture, containing the hydroxylammonium salt, the ammonium salt, the supported platinum catalyst and residual mineral acid, from the upstream reaction zone or zones, or with a fresh aqueous solution of the mineral acid, which contains the supported platinum catalyst in suspension.

**Revendication**

Procédé de préparation de sels d'hydroxylammonium par réduction catalytique de bioxyde d'azote avec de l'hydrogène, en solution aqueuse diluée d'acides minéraux, en présence de catalyseur de platine sur support, à température élevée et sous pression élevée, dans au moins deux zones de réaction, caractérisé par le fait que l'on effectue la réaction dans une ou plusieurs zones de réaction, sous une pression de 3 à 20 bar, on détend les gaz dégagés, contenant du protoxyde d'azote formé, à une pression plus basse de 3 à 10 bar et on les fait réagir, dans une zone suivante, avec le mélange de réaction, contenant le sel d'hydroxylammonium, le sel d'ammonium, le catalyseur de platine sur support, et encore du sel minéral libre, et provenant de la ou des zones de réaction précédentes ou d'une solution aqueuse fraîche de sels minéraux, contenant, en suspension, du catalyseur de platine sur support.